# DEMANDE DE BREVET EUROPEEN

(11) **EP 4 122 734 A1**
(43) Date de publication de la demande: **25.01.2023**
(21) Numéro de dépôt: 22180822.3
(22) Date de dépôt: 23.06.2022
(51) Int. Cl.: B60K 1/04, B60L 53/80, H01M 50/20, H01M 50/249, H01M 50/244

(54) **VÉHICULE AUTOMOBILE ÉLECTRIQUE À BATTERIE D'ACCUMULATEURS ÉCHANGEABLE**

(30) Priorité: 22.07.2021 FR 2107942
(71) Demandeur: Renault s.a.s, 92100 Boulogne Billancourt (FR)
(72) Inventeur: CHEREAU, Pierre, 78084 GUYANCOURT CEDEX (FR); GRIZAUD, Eric, 78084 GUYANCOURT CEDEX (FR); HEWAK, Gregor, 78084 GUYANCOURT CEDEX (FR); ROLLET, Remi, 78084 GUYANCOURT CEDEX (FR)

(57) **Abrégé**

L'invention concerne un véhicule automobile électrique (10) à batterie d'accumulateurs échangeable comprenant un châssis (12) comportant lui-même deux longerons (22, 24) sensiblement parallèles l'un par rapport à l'autre, ledit véhicule comprenant en outre : un réceptacle (28) pour recevoir une batterie d'accumulateurs (30) et un logement (26) pour accueillir ledit réceptacle, ledit réceptacle formant un chemin de passage (48) pour ladite batterie d'accumulateurs (30), ledit chemin de passage (48) s'étendant selon une direction transversale auxdits longerons (22, 24) et débouchant dans ledit logement (26). Ledit logement (26) est situé entre lesdits longerons (22, 24), ledit réceptacle étant apte à former le chemin de passage (48) selon une direction inclinée par rapport audit châssis (12), pour recevoir ladite batterie d'accumulateurs (30).

## Description

[La présente invention se rapporte à un véhicule automobile électrique à batterie d'accumulateurs échangeable.

Des véhicules automobiles électriques connus comprennent une batterie d'accumulateurs installée à demeure sur le véhicule pour pouvoir alimenter un moteur électrique.

Avant que la batterie d'accumulateurs n'affiche une charge impropre au fonctionnement normal du moteur électrique, une alarme avertit le conducteur que la batterie d'accumulateurs doit être rechargée dans un temps proche. Aussi, des bornes de recharge sont installées, notamment en milieu urbain, pour que les automobilistes puissent y brancher leur véhicule.

Usuellement, la durée de recharge des batteries d'accumulateurs est de quelques heures, voire même d'une dizaine d'heures lorsque la batterie est entièrement déchargée.

Aussi, les conducteurs prévoient-ils leur trajet en fonction de ces conditions de rechargement. Toutefois, les véhicules électriques actuels ont une autonomie moyenne de 200 km. En conséquence, pour ceux qui utilisent leur véhicule pour se rendre quotidiennement à leur travail par exemple, dans la plupart des cas, la seule recharge durant leur phase de repos est suffisante.

En revanche, lorsque les distances parcourues sont importantes, il peut être nécessaire de recharger la batterie du véhicule plus fréquemment. Or la durée de recharge est difficilement compressible.

Aussi, il a été imaginé de pouvoir échanger la batterie d'accumulateurs, dans des stations-service adaptées, à la manière des stations-service usuelles fournissant le carburant des véhicules thermiques.

Ainsi, lorsqu'un véhicule électrique est pris en charge dans ce type de stations-service, sa batterie d'accumulateurs est extraite et une batterie d'accumulateurs chargée est remise à la place. Le véhicule peut alors repartir aussitôt.

On pourra se référer au document WO 2018 36 576 A2, lequel décrit un tel type de véhicule.

En revanche, cette possibilité de substitution de la batterie d'accumulateurs, nécessite de ménager un espace du véhicule automobile relativement accessible pour pouvoir aisément extraire la batterie et en remettre une nouvelle.

De surcroît, cet espace doit être situé le plus bas possible dans le véhicule pour conserver un centre d'inertie proche du sol. Car en effet, les batteries d'accumulateurs sont relativement pesantes.

Aussi, un problème qui se pose et que vise à résoudre la présente invention, est de fournir un véhicule automobile électrique à batterie d'accumulateurs échangeables dont le centre d'inertie demeure relativement bas.

Dans le but de résoudre ce problème, il est proposé un véhicule automobile électrique à batterie d'accumulateurs échangeable comprenant un châssis comportant lui-même deux longerons sensiblement parallèles l'un par rapport à l'autre, ledit véhicule comprenant en outre : un réceptacle pour recevoir une batterie d'accumulateurs et un logement pour accueillir ledit réceptacle, ledit réceptacle formant un chemin de passage pour ladite batterie d'accumulateurs, ledit chemin de passage s'étendant selon une direction transversale auxdits longerons et débouchant dans ledit logement. Ledit logement est situé entre lesdits longerons, ledit réceptacle étant apte à former le chemin de passage selon une direction inclinée par rapport audit châssis, pour recevoir ladite batterie d'accumulateurs.

Ainsi, une caractéristique de l'invention réside dans le ménagement d'un logement entre les deux longerons du châssis du véhicule de manière à pouvoir y accueillir le réceptacle qui lui-même recevra la batterie d'accumulateurs. Autrement dit, la batterie d'accumulateurs se situera dans l'une des parties les plus basses du châssis, entre les longerons. Ces derniers constituent l'ossature du châssis et ils s'étendent longitudinalement, tandis que des traverses les relient ensemble.

Aussi, la batterie d'accumulateurs, sera introduite, par l'une des faces latérales du véhicule, à travers le chemin de passage incliné par rapport au châssis pour pouvoir être engagée à l'intérieur du réceptacle entre les longerons. En effet, il est impossible de pouvoir engager la batterie d'accumulateurs à travers un chemin de passage parallèle au châssis. Et il faut donc nécessairement passer au-dessus de l'un des longerons pour pouvoir l'engager entre les deux.

En outre, ledit réceptacle est, selon une variante d'exécution, monté pivotant dans ledit logement entre une position inclinée par rapport audit châssis pour recevoir ladite batterie d'accumulateurs et une position escamotée sensiblement parallèle audit châssis pour utiliser ladite batterie.

Autrement dit, ledit réceptacle est monté pivotant dans ledit logement entre une position inclinée par rapport au châssis, dans laquelle il est ouvert pour recevoir la batterie d'accumulateurs, et une position escamotée sensiblement parallèle au châssis, dans laquelle il est fermé. Le réceptacle est notamment dans cette position escamotée, lorsque le véhicule est en face de roulement.

De la sorte, lorsque le réceptacle est incliné, par exemple d'un angle voisin de 15° par rapport au châssis, le plan du châssis étant par exemple défini par le plan moyen défini par les deux longerons, alors, la batterie d'accumulateurs contenue dans le réceptacle peut être extraite à travers le chemin de passage qui lui s'étend également selon un angle voisin de 15° dans le prolongement du réceptacle et qui débouche vers l'extérieur du véhicule automobile.

À l'inverse, et une fois la batterie d'accumulateurs extraite, une nouvelle batterie d'accumulateurs peut être insérée à travers le chemin de passage pour pouvoir engager une nouvelle batterie d'accumulateurs, chargée, à l'intérieur du réceptacle.

Préférentiellement, le réceptacle est monté pivotant le long de l'un desdits longerons. Selon une autre caractéristique particulièrement avantageuse, le réceptacle pivote autour d'un axe sensiblement parallèle audit à l'un desdits longerons. De la sorte, lorsque le réceptacle pivote, son ouverture débouche sensiblement au-dessus de l'autre longeron pour autoriser le passage de la batterie d'accumulateurs.

En outre, et de façon particulièrement avantageuse, ledit châssis comprend des organes mécaniques pour maintenir ledit réceptacle dans ladite position inclinée. De la sorte, il est plus aisé de venir engager la batterie d'accumulateurs à l'intérieur du réceptacle sans avoir besoin de maintenir le réceptacle manuellement.

Selon un mode de réalisation particulièrement avantageux, lesdits organes mécaniques comprennent un ensemble de levier et de biellette pour entraîner ledit réceptacle en pivotement. Le levier est par exemple monté pivotant près dudit longeron opposé à l'axe du pivotement du réceptacle. Et la biellette relie le levier et le réceptacle. Le pivotement du levier entraîne alors la biellette et par là-même, le réceptacle en pivotement, et cela, sans effort important. On prévoit, comme on l'expliquera plus en détail dans la suite de la description, que le levier et la biellette puissent former genouillère pour bloquer le réceptacle en position pivotée, et d'au moins 15°.

Préférentiellement, lesdits organes mécaniques comprennent un ressort de rappel pour maintenir ledit réceptacle dans ladite position inclinée. Le ressort de rappel est alors une aide au pivotement du réceptacle pour le maintenir dans la position pivotée.

Selon une autre variante d'exécution, ledit réceptacle est monté en position fixe inclinée dans ledit logement. De la sorte, la batterie d'accumulateurs est moins basse dans le véhicule que dans les modes de réalisation précédents, mais en revanche, elle demeure dans une position acceptable pour conserver un centre d'inertie suffisamment bas. Par ailleurs, une telle configuration simplifie le mécanisme de fixation du réceptacle.

En outre, et de manière particulièrement avantageuse, ledit réceptacle comprend un fond équipé de premiers organes d'enfichage, tandis que ladite batterie d'accumulateur comprend des seconds organes d'enfichage adaptés à coopérer avec lesdits premiers organes d'enfichage lorsque ledit réceptacle reçoit ladite batterie d'accumulateurs. De la sorte, la liaison entre la batterie d'accumulateurs et les organes de distribution de l'énergie électrique vers le moteur se réalise automatiquement, lorsque la batterie d'accumulateurs est engagée à l'intérieur du réceptacle. À l'inverse, la déconnexion de la batterie d'accumulateurs est réalisée automatiquement lorsqu'elle est extraite du réceptacle.

En outre, et selon encore un autre mode de mise en œuvre, le véhicule automobile comprend un autre réceptacle superposé audit un réceptacle pour pouvoir recevoir une autre batterie d'accumulateur. De la sorte, lorsque le moteur électrique du véhicule est plus puissant ou bien qu'une autonomie supérieure est requise, on vient engager deux batteries d'accumulateurs respectivement dans les deux réceptacles.

Aussi, le véhicule automobile comprend un siège conducteur et préférentiellement, ledit logement est situé sous le siège conducteur. En outre, et de manière particulièrement avantageuse, le siège conducteur est mobile en pivotement selon une direction longitudinale afin de pouvoir agrandir ledit chemin de passage lorsque les batteries d'accumulateurs sont de grands volumes, ou bien que deux d'entre elles sont insérées dans deux réceptacles.

Préférentiellement, le siège conducteur pivote en même temps que les réceptacles autour du même axe que ceux-ci.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
[Fig. 1] est une vue schématique partielle en perspective de côté d'un véhicule automobile électrique conforme à l'invention ;
[Fig. 2] est une vue schématique partielle en coupe transversale du véhicule automobile électrique conforme à l'invention, selon un mode de mise en oeuvre ;
[Fig. 3] est une vue schématique partielle en coupe transversale du véhicule automobile électrique conforme à l'invention, selon une variante de réalisation ;
[Fig. 4] est une vue schématique partielle en coupe transversale du véhicule automobile électrique conforme à l'invention, selon une autre variante de réalisation ;
[Fig. 5] est une vue schématique partielle en coupe transversale du véhicule automobile électrique conforme à l'invention, selon un autre mode de mise en œuvre ; et,
[Fig. 6] est une vue schématique partielle en coupe transversale du véhicule automobile électrique conforme à l'invention, selon encore un autre mode de mise en œuvre.

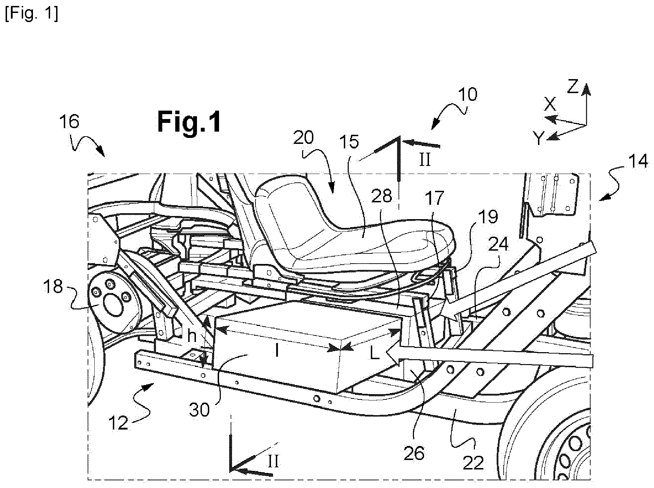

La [Fig. 1] montre schématiquement de côté l'ossature d'un véhicule automobile électrique 10 conforme à l'invention. Elle montre en particulier un châssis 12 présentant une extrémité avant 14 opposée à une extrémité arrière 16. Le châssis 12 s'étend selon un plan moyen Pm sensiblement horizontal. Aussi, selon un mode de réalisation particulier, le véhicule 10 comprend un moteur électrique arrière 18 et un siège conducteur central 20.

Le siège conducteur central 20 comporte une assise 15 en appui sur deux profilés longitudinaux parallèles, un droit 17 et un gauche 19, maintenus au-dessus et à distance du châssis 12.

Ainsi, le véhicule automobile électrique 10 s'étend longitudinalement de l'extrémité avant 14 vers l'extrémité arrière 16 du châssis 12 selon l'axe X. Il s'étend transversalement, de la gauche vers la droite, dans le sens de la marche, selon l'axe Y. Et il s'étend à l'opposé du sol selon l'axe Z.

Le châssis 12 présente deux longerons sensiblement parallèles, un longeron droit 22 et un longeron gauche 24. Les deux longerons 22, 24 sont écartés l'un de l'autre et ils définissent ainsi, entre les deux, un logement 26 à l'intérieur duquel est installé un réceptacle 28. Le plan moyen Pm du châssis 12 vient couper les deux longerons 22, 24.

Le réceptacle 28 est adapté à recevoir une batterie d'accumulateurs 30 de forme générale parallélépipédique rectangle. La batterie d'accumulateurs 30 présente une longueur L sensiblement supérieure à une largeur I, et une hauteur h inférieure à la largeur I. La largeur I de la batterie d'accumulateurs est par exemple supérieure à deux fois sa hauteur h.

Aussi, le réceptacle 28 présente une géométrie correspondante parallélépipédique rectangle présentant sensiblement les mêmes dimensions au jeu fonctionnel près. La batterie d'accumulateurs 30 est adaptée à être engagée à l'intérieur du réceptacle 28 selon le sens de sa longueur L.

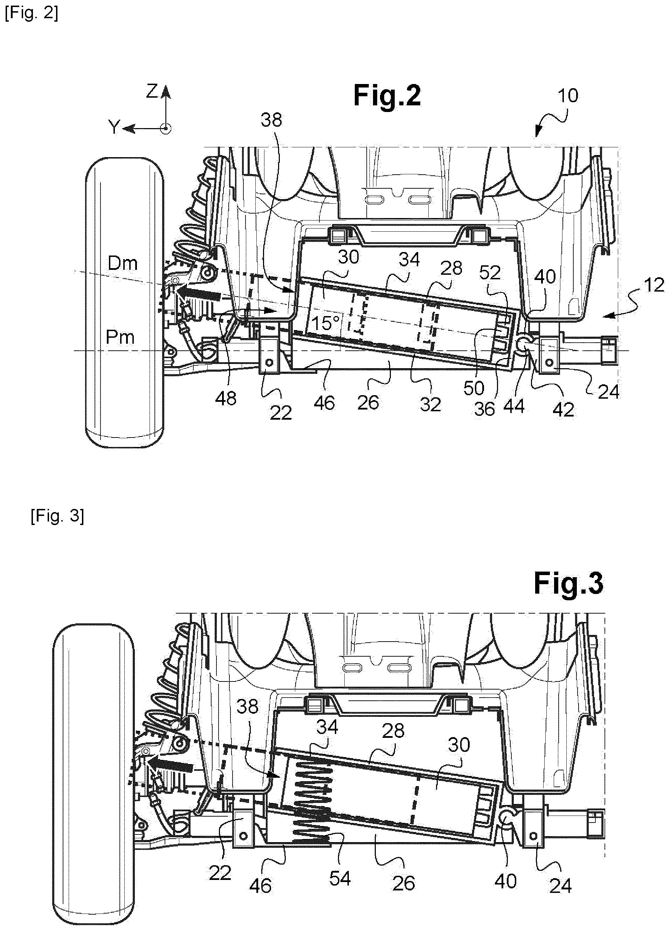

La [Fig. 2] à laquelle on se référera à présent, illustre l'ossature du véhicule automobile électrique 10 en coupe, selon le plan II-II, vu depuis l'avant 14 du châssis 12.

On retrouve sur cette [Fig. 2], le longeron droit 22 écarté du longeron gauche 24 et le logement 26 qu'ils définissent. Aussi, on retrouve le réceptacle 28, lequel présente deux grandes faces opposées, l'une inférieure 32, l'autre supérieur 34 et un fond 36 qui les relie. À l'opposé du fond 36, le réceptacle 28 présente une extrémité ouverte 38 pour pouvoir engager la batterie d'accumulateurs 30.

Le fond 36 du réceptacle 28 présente, à l'extérieur, un premier organe de liaison 40 coopérant avec un second organe de liaison 42 monté à l'intérieur du longeron gauche 24. Et les deux organes de liaison 40, 42 sont reliés ensemble par un axe 44 formant pivot et s'étendant sensiblement parallèlement au longeron gauche 24. Autrement dit, l'axe 44 s'étend sensiblement selon l'axe longitudinal X du véhicule 10.

De la sorte, le réceptacle 28 est monté mobile en pivotement à l'intérieur du logement 26 autour de l'axe 44.

À l'opposé du longeron gauche 24, le longeron droit 22 présente une cornière 46, adaptée à former un appui pour la grande face inférieure 32 du réceptacle 28 lorsque ce dernier est pivoté et s'étend sensiblement parallèlement au châssis 12.

Tel que représenté sur la [Fig. 2], le réceptacle 28 s'étend selon une direction moyenne de plus grande pente Dm inclinée d'environ 15° par rapport au plan moyen Pm du châssis 12.

Aussi, la batterie d'accumulateurs 30 a été entraînée en translation à travers un chemin de passage 48. Ce dernier s'étend depuis l'extérieur du véhicule 10, vers le logement 26 selon une composante transversale -Y et de manière inclinée par rapport au plan moyen Pm du châssis 12, soit selon une composante -Z.

Le chemin de passage 48 s'étendant de manière inclinée par rapport au châssis 12, on vient insérer la batterie d'accumulateurs 30 au-dessus du longeron droit 22 à l'intérieur du réceptacle 28 lui-même incliné.

On observera que la batterie d'accumulateurs 30 comporte à l'une de ses extrémités, des broches de connexion 50, tandis que le fond 36 du réceptacle 28 est muni d'organes de réception 52 adaptés à recevoir en correspondance, les broches de connexion 50 lorsque la batterie d'accumulateurs 30 est entraînée en translation dans ledit réceptacle 28 vers le fond 36.

Les organes de réception 52 sont des organes conducteurs de l'électricité reliés au circuit électrique du véhicule automobile électrique 10 conduisant au moteur. Quant aux broches de connexion 50, elles sont conductrices également de l'électricité et elles sont directement reliées aux organes de stockage de l'énergie électrique de la batterie.

La section droite transversale de la batterie d'accumulateurs 30 correspond à celle du réceptacle 28 de sorte que ce dernier est adapté à guider en translation la batterie d'accumulateurs 30. Aussi, les broches de connexion 50 et les organes de réception 52 viennent s'enficher les uns dans les autres lorsque la batterie d'accumulateurs 30 est enfoncée dans le réceptacle 28. De la sorte la connexion entre la batterie d'accumulateurs 30 et le circuit électrique du véhicule automobile électrique 10 est automatique.

Selon un mode de mise en œuvre de l'invention particulier, représenté sur la [Fig. 3], le réceptacle 28 est maintenu dans la position inclinée telle que représentée sur la [Fig. 2], au moyen d'un ressort 54 monté près du réceptacle 28, entre un prolongement de la cornière 46 et une patte latérale du réceptacle 28.

On retrouve sur cette [Fig. 3] à l'identique, tous les autres éléments représentés sur la [Fig. 2].

Ainsi, après que la batterie d'accumulateurs 30 a été engagée à l'intérieur du réceptacle 28 et qu'elle a connectée au circuit électrique du véhicule, le réceptacle 28 peut être pivotée autour de l'axe 44, de manière à ce qu'il vienne prendre appui sur la cornière 46. Pour ce faire, on vient alors contraindre le ressort 54 et, verrouiller alors le réceptacle 28 ensuite dans cette position.

Dans cette position, le réceptacle 28 s'étend sensiblement entre les deux longerons 22, 24 selon le plan moyen Pm du châssis 12. Dans cette position, la batterie d'accumulateurs 30 dont le poids est relativement important, et au surplus le réceptacle 28 qui la reçoit, est situé dans une position verticale selon Z la plus proche du sol. De la sorte, le centre d'inertie du véhicule 10 est d'autant plus bas.

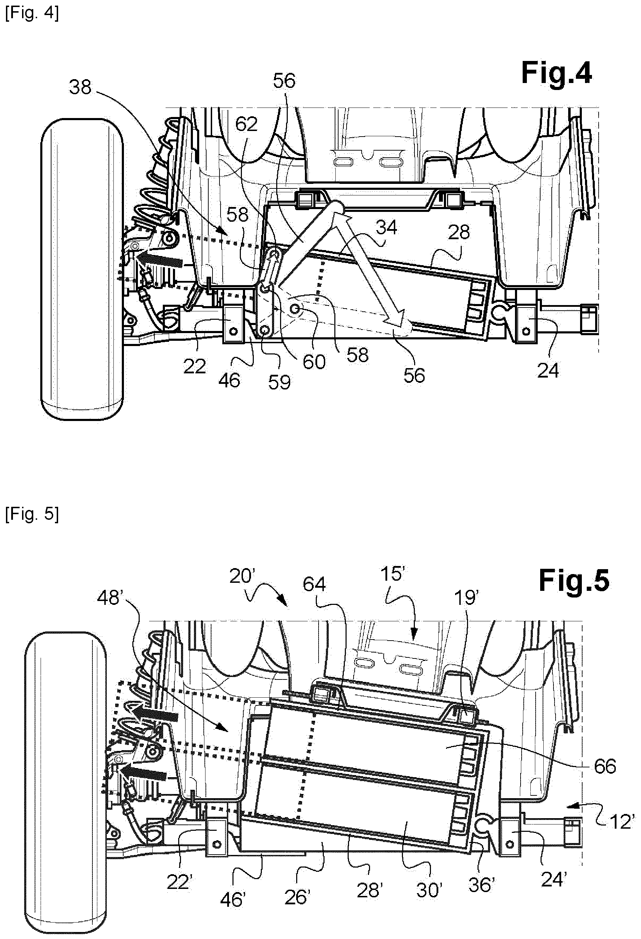

Selon un autre mode de mise en œuvre particulier, tel qu'illustré sur la [Fig. 4], le réceptacle 28 est entraîné en pivotement et maintenu en position pivotée au moyen d'un ensemble mécanique comprenant un levier 56 et une biellette 58.

Le levier 56 est monté pivotant autour d'un pivot 59 parallèle au longeron droit 22 et situé dans la cornière 46. Le levier 56 peut pivoter le long du réceptacle 28.

Le levier 56 présente un coude 60 au niveau duquel la biellette 58 est montée à pivotement. Et en outre, la biellette 58 présente une extrémité opposée au coude, 62, montée pivotante sur le bord de la grande face supérieure 34 du réceptacle 28, vers l'extrémité ouverte 38. Dans une première position, où ledit ensemble mécanique forme genouillère de blocage, la partie du levier 56, située entre le pivot 59 le coude 60, est en appui, sensiblement verticalement, contre l'une des ailes de la cornière 46, tandis que la biellette 58, sous le poids du réceptacle 28 exerce une force tendant à entraîner la partie de levier 56 contre l'aile verticale de la cornière 46. L'ensemble mécanique est isostatique et le réceptacle 28 est ainsi maintenu en position fixe dans une position inclinée.

Pour escamoter la batterie d'accumulateurs et entraîner le réceptacle 28 vers sa position horizontale, on vient alors entraîner le levier 56 vers le longeron gauche 24. En conséquence, la biellette 58 pivote par rapport au réceptacle 28 vers le longeron gauche 24. Et à mesure que le coude 60 du levier 56 s'abaisse durant le pivotement, le réceptacle 28 pivote également.

Le réceptacle 28 vient alors en appui sur la cornière 46, tandis que le levier 56 vient s'étendre sensiblement horizontalement. Le levier 56 et la biellette 58 sont représentés en points Interrompus sur la [Fig. 4] dans cette dernière position.

On comprend qu'à l'inverse, le réceptacle 28 est relevé vers sa position inclinée en relevant le levier 56.

Selon un autre mode de mise en œuvre de l'invention, tel qu'illustré sur la [Fig. 5], deux batteries d'accumulateurs sont superposées. Aussi, les éléments identiques aux modes précédents de mise en œuvre porteront les mêmes références affectées d'un signe « ' », tandis que les nouveaux éléments porteront des références dans le prolongement de la suite des références déjà utilisées.

Tout d'abord, on observera que l'assise 15' du siège 20' a été rendue solidaire des réceptacles 64 et 28', à rotation autour de l'axe 44, de manière à pouvoir augmenter la hauteur du chemin de passage 48'.

Aussi, on retrouve les deux longerons, droit 22', gauche 24', et le logement 26' dans lequel le réceptacle 28' est monté articulé le long du longeron gauche 24' tout comme dans le précédent mode de mise en œuvre.

En revanche, un réceptacle supplémentaire 64 est superposé au réceptacle 28' et en est totalement solidaire. Le réceptacle supplémentaire est adapté à recevoir de la même façon, une batterie d'accumulateurs supplémentaire 66.

Aussi, le réceptacle supplémentaire 64 est totalement identique et solidaire du réceptacle 28'. Les deux réceptacles superposés 28', 64 sont ici dans une position inclinée qui justifie le basculement de l'assise 15'.

En revanche, dès lors que les deux réceptacles superposés 28', 64 sont portés dans une position horizontale, autrement dit, que le réceptacle 28' a pivoté de manière à venir en appui sur la cornière 46', l'assise 15' du siège 20' peut alors retrouver sa position normale.

La mise en œuvre d'une seconde batterie d'accumulateurs se justifie par exemple pour augmenter l'autonomie du véhicule électrique.

Sur ce dernier mode de mise en œuvre, les batteries d'accumulateurs sont également dans une situation ou elles sont les plus basses possible sur le châssis 12'. De la sorte, le centre de gravité du véhicule demeure bas.

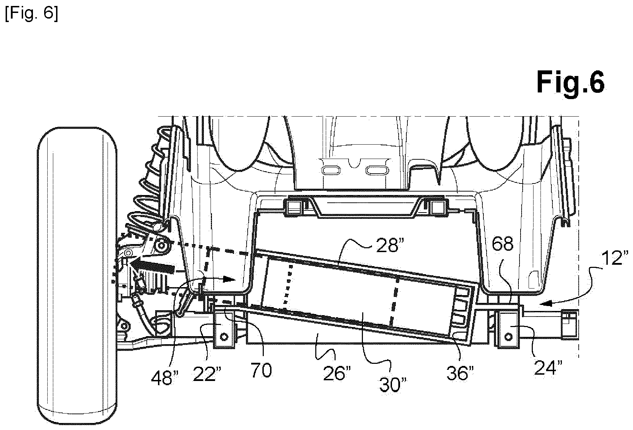

Selon encore un autre mode de mise en œuvre de l'invention, illustrée sur la [Fig. 6], sur laquelle on retrouve tous les éléments représentés sur la [Fig. 2], repérés avec la même référence affectée d'un signe « " », le réceptacle 28" est maintenu en position fixe entre les deux longerons 22", 24", et incliné d'un angle voisin de 15° avec le châssis 12".

Pour ce faire, le fond 36" du réceptacle 28" est prolongé par des pattes d'appui 68 qui viennent en appui sur le longeron gauche 24". Et à l'opposé, la grande face inférieure 32" du réceptacle 28" présent une bordure 70 qui vient en appui sur le longeron droit 22".

Ainsi, la batterie d'accumulateurs 30" demeure elle-même inclinée, de telle sorte que le centre de gravité du véhicule n'est pas au plus bas possible. Néanmoins, dans certains modes de mise en œuvre, du véhicule automobile électrique selon l'invention, une telle configuration peut être acceptée. Par ailleurs, cela permet également de simplifier le montage du réceptacle 28".

## Revendications

1. Véhicule automobile électrique (10) à batterie d'accumulateurs échangeable comprenant un châssis (12) comportant lui-même deux longerons (22, 24) sensiblement parallèles l'un par rapport à l'autre, ledit véhicule comprenant en outre :
- un réceptacle (28) pour recevoir une batterie d'accumulateurs (30) et un logement (26) pour accueillir ledit réceptacle, ledit réceptacle formant un chemin de passage (48) pour ladite batterie d'accumulateurs (30), ledit chemin de passage (48) s'étendant selon une direction transversale auxdits longerons (22, 24) et débouchant dans ledit logement (26) ;
ledit véhicule étant **caractérisé en ce que** ledit logement (26) est situé entre lesdits longerons (22, 24), ledit réceptacle étant apte à former le chemin de passage (48) selon une direction inclinée par rapport audit châssis (12), pour recevoir ladite batterie d'accumulateurs (30).

2. Véhicule automobile électrique selon la revendication 1, **caractérisé en ce que** ledit réceptacle (28) est monté pivotant dans ledit logement (26) entre une position inclinée par rapport audit châssis (12) pour recevoir ladite batterie d'accumulateurs (30) et une position escamotée sensiblement parallèle audit châssis (12) pour utiliser ladite batterie.

3. Véhicule automobile électrique selon la revendication 2, **caractérisé en ce que** ledit réceptacle (28) est monté pivotant le long de l'un desdits longerons (24).

4. Véhicule automobile électrique selon la revendication 2 ou 3, **caractérisé en ce que** ledit châssis (12) comprend des organes mécaniques (54, 56, 58) pour maintenir ledit réceptacle (28) dans ladite position inclinée.

5. Véhicule automobile électrique selon la revendication 4, **caractérisé en ce que** lesdits organes mécaniques comprennent un ensemble de levier (56) et de biellette (58) pour entraîner ledit réceptacle (28) en pivotement.

6. Véhicule automobile électrique selon la revendication 4 ou 5, **caractérisé en ce que** lesdits organes mécaniques comprennent un ressort de rappel (54) pour maintenir ledit réceptacle (28) dans ladite position inclinée.

7. Véhicule automobile électrique selon la revendication 1, **caractérisé en ce que** ledit réceptacle (28) est monté en position fixe inclinée dans ledit logement.

8. Véhicule automobile électrique selon l'une quelconque des revendications 1 à 7, **caractérisé en ce que** ledit réceptacle comprend un fond (36) équipé de premiers organes d'enfichage (52), tandis que ladite batterie d'accumulateur comprend des seconds organes d'enfichage (50) adaptés à coopérer avec lesdits premiers organes d'enfichage (52) lorsque ledit réceptacle (28) reçoit ladite batterie d'accumulateur (30).

9. Véhicule automobile électrique selon l'une quelconque des revendications 1 à 8, **caractérisé en ce qu'**il comprend un autre réceptacle (64) superposé audit un réceptacle (28') pour pouvoir recevoir une autre batterie d'accumulateur (66).

10. Véhicule automobile électrique selon l'une quelconque des revendications 1 à 9, **caractérisé en ce qu'**il comprend un siège conducteur (20) et **en ce que** ledit logement (26) est situé sous ledit siège conducteur (20).

11. Véhicule automobile électrique selon l'une quelconque des revendications 1 à 10, **caractérisé en ce que** le siège conducteur (20) pivote en même temps que les réceptacles (28') et (64) autour du même axe (44) que ceux-ci.
